Europäisches Patentamt

European Patent Office

Office européen des brevets

(11) Publication number: **0 293 188 B1**

## EUROPEAN PATENT SPECIFICATION

(45) Date of publication of patent specification: **15.07.92**  (51) Int. Cl.⁵: **H04N 9/79**, H04N 5/21

(21) Application number: **88304746.6**

(22) Date of filing: **25.05.88**

(54) **VTR playback chrominance signal processing circuit.**

(30) Priority: **25.05.87 JP 125963/87**

(43) Date of publication of application:
**30.11.88 Bulletin 88/48**

(45) Publication of the grant of the patent:
**15.07.92 Bulletin 92/29**

(84) Designated Contracting States:
**DE FR GB**

(56) References cited:
**EP-A- 0 217 565
DE-A- 3 504 647
DE-B- 2 911 927
FR-A- 2 502 879
US-A- 4 658 285**

(73) Proprietor: **VICTOR COMPANY OF JAPAN, LIMITED
3-12, Moriya-cho
Kanagawa-ku Yokohama(JP)**

(72) Inventor: **Kosaka, Yoshiteru
1-13-27, Kotsubo
Zushi-shi Kanagawa-ken(JP)**
Inventor: **Yamada, Kunio
3-20-3, Umeda Adachi-ku
Tokyo(JP)**

(74) Representative: **Senior, Alan Murray et al
J.A. KEMP & CO 14 South Square Gray's Inn
London WC1R 5EU(GB)**

## Description

The present invention relates in general to a playback chrominance signal processing circuit for a video tape recorder and in particular to a processing circuit for a chrominance signal obtained by playback of a frequency down-shifted chrominance signal, whereby crosstalk components from adjacent tracks on the tape are suppressed by a comb filter, with the suppression processing being controlled in accordance with line correlation error.

The main types of helical scan VTR (video tape recorder) used at the present time for color video signal recording and playback generally operate by separating the luminance signal component and chrominance signal component from that video signal, then frequency modulating a carrier by the luminance signal component to obtain a frequency modulated (FM) luminance signal and executing frequency down-conversion of the chrominance signal component to a frequency range which is lower than the frequency range of the FM luminance signal, i.e. to obtain a down-shifted carrier chrominance signal. Prior to this down-conversion, the chrominance signal component (referred to in the following as the carrier chrominance signal) is a signal obtained by modulation of a carrier signal (the latter being known as the chrominance subcarrier). The FM luminance signal and the down-shifted carrier chrominance signal are then frequency multiplexed, and the resultant frequency multiplex signal is recorded by rotary heads on a magnetic tape. During playback, the opposite forms of signal processing to those used during recording are applied to the playback frequency multiplexed signal, to thereby obtain a playback color video signal. This frequency down-shifting recording and playback method is well known in the art.

In order to achieve high efficiency of magnetic tape utilization with such a down-conversion color television VTR, normally each pair of mutually adjacent recording tracks are recorded without a guard band (or only a very small guard band) between them, and are respectively recorded by two rotary heads having mutually different azimuth angles. These angles are determined such as to minimize the generation of crosstalk components from adjacent tracks in the playback carrier chrominance signal. However since this crosstalk suppression effect is small at low frequencies, the frequency down-shifted carrier chrominance signal will include crosstalk from adjacent tracks, which results in deterioration of image quality. For this reason, some form of crosstalk suppression processing must be utilized. This is generally achieved in the case of an NTSC standard video signal by executing phase-shift processing prior to recording and following playback such as to ensure that while the playback carrier chrominance signal that is obtained is inverted in phase between successive horizontal scanning intervals (referred to in the following as 1 H intervals) i.e. between successive scanning lines as a result of frequency interleaving, the crosstalk component of the playback carrier chrominance signal (arising from adjacent tracks on the magnetic tape) is made to have a fixed phase relationship between successive scanning lines. The crosstalk component of the playback carrier chrominance signal can then be effectively suppressed by means of a comb filter, i.e. by applying the carrier chrominance signal to one input of a subtractor and also transferring that signal through a delay circuit having a delay time equal to one horizontal scanning interval (hereinafter referred to as 1 H) to the other input of the subtractor, so that the crosstalk components mutually cancel and the signal/noise ratio of the chrominance signal thus obtained is substantially increased.

A similar method is utilized in the case of a PAL standard playback video signal. In that case, the crosstalk components of scanning lines which are separated by two horizontal scanning intervals (2 H) have a fixed phase relationship in the playback carrier chrominance signal, so that crosstalk suppression processing can be executed in a similar manner to that described above, by using a comb filter with a delay time of 2 H .

One such method of achieving this phase relationship between the carrier chrominance signal and crosstalk components from adjacent tracks, known as the PS (phase shift) method has been described by the assignee of the present invention, in Japanese Patent Publication No. 56-9073 (for an NTSC signal) and in Japanese Patent Publication No. 55-32273 (for a PAL signal), whereby phase shift processing by 90° phase shifts are executed prior to recording and corresponding phase shifts are executed in the opposite direction at the time of playback. Another method known in the art is the PI (phase inversion) method, whereby alternate 180° and zero phase shift operations are employed during recording and playback of NTSC system or PAL system video signals. However the phase relationships between the carrier chrominance signal and crosstalk components of that signal in in the playback video signal are the same for each of these methods, i.e. are as described above for an NTSC and a PAL video signal respectively.

With such a crosstalk suppression technique, it is necessary that there be a sufficient degree of correlation between the carrier chrominance signal in successive 1 H intervals, i.e. between the color data of successive scanning lines of the display image which is to be reproduced. Such correlation will be referred to in the following simply as line correlation. If the line correlation of the playback carrier chrominance signal is low, then the desired crosstalk suppression effect cannot be attained, and in fact color blurring of the resultant displayed image will be produced as a result of processing by the comb filter. Thus, when the line correlation is low (that is, when there is a high degree of line correlation error), improved playback image quality can be obtained if the carrier chrominance signal is not transferred through the comb filter described above. For this reason it is known in the prior art to utilize a playback carrier chrominance signal processing circuit whereby switch selection is executed in accordance with the degree of line correlation of the color video signal to select either the playback carrier chrominance signal after that signal has been passed through the comb filter or the playback carrier chrominance signal which has not yet been passed through the comb filter, as an output carrier chrominance signal which is used in deriving a display image.

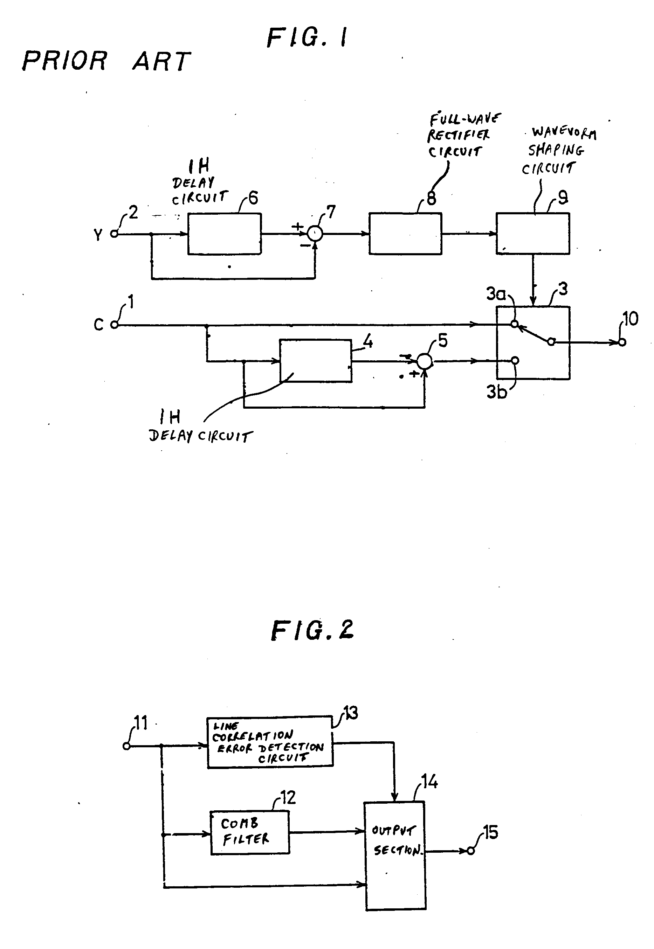

Fig. 1 is a block circuit diagram of an example of a prior art carrier chrominance signal processing circuit for NTSC standard operation, whereby such selection in accordance with the degree of line correlation is executed. In Fig. 1, a playback luminance signal is applied to an input terminal 2, while a playback carrier chrominance signal is applied to an input terminal 1. The playback carrier chrominance signal has been derived by frequency up-shifting conversion of a down-shifted playback carrier chrominance signal, with phase inversion of the carrier chrominance signal between successive lines (if there is a high degree of line correlation) but with the crosstalk components of each line being identical in phase to the crosstalk components of the immediately preceding line, as result of applying the PS method described above, for example. This playback carrier chrominance signal is directly applied to input terminal 3a of a switch circuit 3, and is also applied to a comb filter made up of a 1 H delay circuit 4 and a subtractor circuit 5. Such a comb filter has a frequency/attenuation characteristic whereby if there is a sufficient degree of line correlation, each component of the carrier chrominance signal having a frequency that is an odd-numbered multiple of $f_H/2$ (where $f_H$ is the horizontal scanning frequency) is enhanced. The playback carrier chrominance signal, which has been phase-shifted by 180° between each pair of successive 1 H intervals, is thus enhanced, while the crosstalk components from adjacent tracks which are in-phase in successive 1 H intervals will mutually cancel. A playback carrier chrominance signal with crosstalk components suppressed and a high signal/noise ratio is thereby obtained, which is supplied to terminal 3b of the switch circuit 3 after the amplitude thereof is reduced to one half.

The playback luminance signal which is applied to the input terminal 2 has been obtained by demodulation cf a FM luminance played back from a magnetic tape, and is supplied to a comb filter made up of a 1 H delay circuit 6 and a subtractor circuit 7, whereby a signal is obtained as the difference between the playback luminance signal of the current line and the playback luminance signal of the immediately preceding picture line (i.e. of the preceding 1 H interval). This difference signal varies in accordance with the amount of error in correlation between successive 1 H intervals, referred to in the following as the line correlation error, and the difference signal will be referred to as the line correlation error detection signal. This line correlation error detection signal is passed through a full-wave rectifier circuit 8 and a waveform shaping and level comparator circuit 9 to obtain a switching control signal, which is applied to the switch circuit 3 to control switching operation. Specifically, when the line correlation error is greater than or equal to a preset value as indicated by the level of the full-wave rectifier signal that is applied to the waveform shaping and level comparator circuit, a switching control signal is generated such that the input carrier chrominance signal that is applied to input terminal 1 is selected to be directly transferred to an output terminal 10, while when the line correlation error is lower than the preset value, the playback carrier chrominance signal from the output of the subtractor circuit 5 (i.e. having crosstalk components removed) is selected to be transferred to the output terminal 10.

Variations in image luminance and image color tone will frequently coincide. This prior art circuit functions by judging that a substantial change in color tone in the vertical direction of the image will correspond to a large value of line correlation error for the playback luminance signal, and uses this relationship to by-pass the comb filter used for carrier chrominance signal crosstalk suppression in the event that a high degree of line correlation error occurs, and hence prevent color blurring being produced in the displayed image due to line correlation error of the carrier chrominance signal.

However with the prior art carrier chrominance signal processing circuit described above, since line correlation error detection is executed on the basis of the playback luminance signal, unnecessary switching may be performed in the case of an image in which there are variations in luminance which are not accompanied by color tone variations, so that crosstalk suppression will not be effectively attained. Conversely, the circuit may transfer the output playback carrier chrominance signal from the output of the comb filter under a condition in which there are considerable variations in color tone, but almost no variations in the image luminance. In that case, color blurring will not be prevented.

In addition to this, the carrier frequencies of FM luminance signals recorded on mutually adjacent tracks of the magnetic tape may be mutually displaced in frequency by an amount which is an odd-numbered multiple of $f_H/2$. This is done with some type of VTR, to reduce the visual effect of crosstalk components from adjacent tracks contained in the playback luminance signal, which cause deterioration of image quality. However in such a case, the crosstalk components of the luminance signal resulting from adjacent tracks will be inverted for each of successive 1 H intervals. Thus, luminance signal crosstalk components appearing at the output terminal of the comb filter used for line correlation error detection (i.e. made up of the 1 H delay circuit 6 and the subtractor circuit 7) will be enhanced. As a result, even when there is actually almost no line correlation error, the circuit may erroneously judge that there is a considerable degree of line correlation error, and this will result in incorrect operation.

It is an objective of the present invention to overcome the problems described above, by providing a playback carrier chrominance signal processing circuit which executes appropriate control to either transfer a playback carrier chrominance signal through a crosstalk-suppression comb filter or to by-pass that comb filter, by accurately detecting an amount of line correlation error of the carrier chrominance signal. This is achieved by directly detecting that line correlation error from the carrier chrominance signal itself, rather than from the luminance signal component of the playback video signal.

EP-A-0217565 discloses a playback chrominance signal processing circuit in which switching control of the operation of a comb filter (used to remove crosstalk noise from the playback carrier chrominance signal) is executed based on a combination of the conditions of line correlation (i.e. vertical correlation between the contents of successive scan lines) of both the luminance signal and the carrier chrominance signal of the playback video signal. However this causes certain problems. (a) In some cases, the playback chrominance signal comb filter operation may be changed (e.g. to effectively bring into operation the comb filter) in response to a change in line correlation condition of the luminance signal, even when there is no change in the line correlation condition of the carrier chrominance signal. (b) In some cases, when the playback carrier chrominance signal line correlation changes to a condition in which the comb filter could be advantageously used, but there is no change in the line correlation condition of the playback luminance signal, the comb filter may be left in a condition of partial or complete ineffectiveness, so that color blurring will occur which could otherwise be prevented by the action of the comb filter.

According to the present invention there is provided a playback chrominance signal processing circuit for processing an input playback video signal which has been reproduced from a recording medium and includes a input playback carrier chrominance signal, including processing means for removing noise contained in said input playback carrier chrominance signal, and line correlation error detection means for detecting a degree of line correlation error between successive scan lines of said video signal, with operating characteristics of said processing means being controlled in accordance with said amount of line correlation error, characterised in that said line correlation error detection means comprises:

line correlation error detection means coupled to receive said input playback carrier chrominance signal, for detecting an amount of line correlation error between said input playback carrier chrominance signal as currently received and said input playback carrier chrominance signal after having been delayed by an amount equal to 2k times said horizontal scanning interval, where k is a positive integer equal to one in the case of an NTSC standard playback chrominance signal and equal to two in the case of a PAL standard playback chrominance signal, and for producing a detection signal in accordance with said amount of line correlation error;

and wherein said processing means comprises:

filter processing means controlled, when an amount of line correlation error of said input playback carrier chrominance signal is below a predetermined value as indicated by said detection signal, for delaying said input playback carrier chrominance signal by a time amount equal to k times the duration of a horizontal scanning interval of said video signal, to obtain a delayed playback carrier chrominance signal, and for mixing said input playback carrier chrominance signal with said delayed playback carrier chrominance signal, and controlled, when said amount of line correlation error is above said predetermined value as indicated by said detection signal, for directly outputting said input playback carrier chrominance signal as said output playback carrier chrominance signal.

The invention will be further described by way of non-limitative example with reference to the accompanying drawings, in which:-

Fig. 1 is a block circuit diagram of an example of a prior art circuit for VTR playback signal processing;

Fig. 2 is a simplified block circuit diagram for describing the basic principles of the present invention;

Fig. 3 is a block circuit diagram of a first embodiment of a VTR playback signal processing circuit according to the present invention;

Fig. 4 and 5 are diagrams for illustrating line correlation error detection operation by the circuit of Fig. 3, for the case of a PAL and an NTSC standard video signal respectively;

Fig. 6 is a block circuit diagram of a second embodiment of the present invention;

Figs. 7 and 8 are block circuit diagrams of third and fourth embodiments of the invention, in which continuously variable control is executed of attenuation by a crosstalk-suppression comb filter, in accordance with line correlation error magnitude;

Fig. 9A is a circuit diagram of an embodiment of a full-wave rectifier circuit for producing an output signal varying in accordance with line correlation error; and

Fig. 9B is a circuit diagram of a 1 H delay line and a signal combining circuit controlled by the output signal from the circuit of Fig. 9A, for use in the third and fourth embodiments.

Fig. 2 is a block diagram for illustrating the basic principles of the present invention. In Fig. 2, a playback carrier chrominance signal applied to an input terminal 11 has been obtained by frequency up-conversion of the down-shifted carrier chrominance signal recorded on a magnetic tape, with phase shift processing as described hereinabove having been implemented such that phase inversion of the carrier chrominance signal occurs for successive lines, i.e. successive 1 H intervals, while a constant phase relationship is maintained for the crosstalk components of that chrominance signal for successive lines.

This signal is transferred to a comb filter 12, a line correlation error detection section 13, and an output section 14 respectively. The comb filter 12 serves to suppress crosstalk components in the playback carrier chrominance signal arising from adjacent tracks, and is made up of a delay circuit having a delay time of k.H (where $\underline{k}$ is a positive integer which is equal to 1 in the case of an NTSC system playback carrier chrominance signal and is 2 in the case of a PAL system signal), and a subtractor element. The line correlation error detection section 13 serves to detect correlation between lines of the playback carrier chrominance signal that are separated by an interval $2k \bullet H$. According to one embodiment of the invention, as described in detail hereinafter, the output section 14 functions in accordance with the magnitude of the line correlation error detected by the line correlation error detection section 13 to transfer to an output terminal 15 either the playback carrier chrominance signal applied to the input terminal 11 (if the line correlation error is excessively high) or the output playback carrier chrominance signal produced from the comb filter 12 (if the line correlation error is sufficiently low). According to another embodiment of the invention, if the line correlation error is below a predetermined value, the output section 14 functions to transfer the output carrier chrominance signal from the comb filter 12 directly to the output terminal 15, and if the correlation error is above the predetermined value, functions in effect to combine the comb filter input and output signals such that an output signal is transferred to the output terminal 15 which changes in a continuously variable manner between a condition in which the maximum degree of attenuation by the comb filter is obtained to a condition in which only the input signal to the comb filter is transferred, i.e. with zero attenuation by the comb filter being produced, with this change being controlled in accordance with the magnitude of the line correlation error.

More specifically, a signal which is determined by the magnitude of the playback carrier chrominance signal line correlation error is supplied to control the operation of the output section 14. If the output section 14 is configured according to the first aspect of the invention, i.e. such as to select either the input playback carrier chrominance signal or the output playback carrier chrominance signal from the comb filter 12 to be produced as the output signal from output section 14, then the aforementioned signal that is determined by the line correlation error is a signal whose level differs in accordance with whether the line correlation error is greater than or less than a preset value. In this case, when the line correlation error is smaller than the preset value (i.e. when there is a sufficient degree of line correlation), the playback carrier chrominance signal that is produced from the comb filter 12 (with crosstalk components suppressed) is selected to be produced from the output section 14. If the line correlation error is greater than the preset value (i.e. the degree of line correlation is insufficient), the input playback carrier chrominance signal is directly transferred from terminal 11 to be produced from the output section 14, and subsequently used in image display processing.

Alternatively, the output section 14 can be configured such as to in effect continuously vary the ratio by which the input playback carrier chrominance signal is combined with the output playback carrier chrominance signal from the comb filter 12, with the proportion of the input playback carrier chrominance signal that is utilized being increased substantially in accordance with the degree of line correlation error. In this case, a suitable detection signal is derived by the line correlation error detection section 13 for accomplishing that proportional variation. The larger the line correlation error, the lower becomes the degree of filter attenuation in the whole signal processing circuit, until a condition is reached which is equivalent to directly transferring the input playback carrier chrominance signal directly to be produced from the output section 14, without being transferred through the comb filter 12.

In this way with the present invention, the line correlation error of the playback carrier chrominance signal is detected by a comb filter which contains a delay circuit having a delay time of 2k•H, and based on this correlation error, the input or the output playback carrier chrominance signal of the comb filter are selected to be produced, or alternatively control is executed in accordance with the degree of line correlation error such as to in effect vary the proportion in which the input and output signals of the comb filter are combined to produce an output playback carrier chrominance signal.

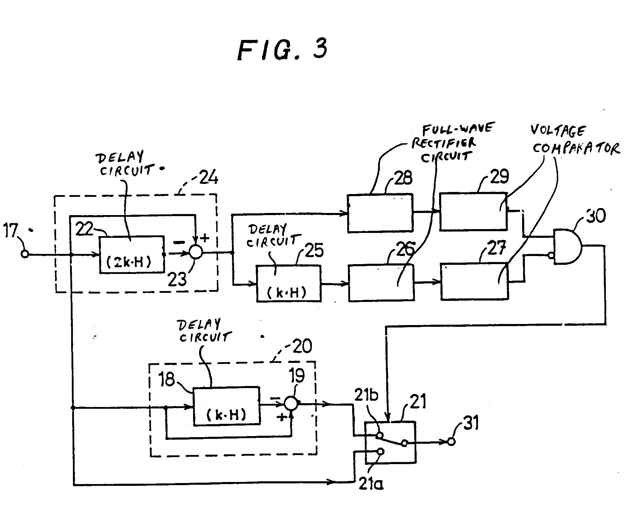

Fig. 3 is a block circuit diagram of a first embodiment of the present invention. In Fig. 3, a playback carrier chrominance signal which corresponds to the carrier chrominance signal applied to input terminal 1 in Fig. 1, is applied to an input terminal 17, and is transferred to a first comb filter 20 which is made up of a delay circuit 18 and a subtractor circuit 19 with an unshown attenuator which reduces the amplitude of subtractor 19 to one half. The delay of the delay circuit 18 is k•H (where k is a positive integer which is equal to two in the case of the PAL system playback carrier chrominance signal and equal to one in the case of an NTSC system signal). The comb filter 20 serves to suppress crosstalk components from adjacent tracks contained in the playback carrier chrominance signal as described hereinabove, i.e. corresponds to comb filter 12 in Fig. 2. The playback carrier chrominance signal applied to input terminal 17 is also supplied to a second comb filter 24 which is formed of a delay circuit 22 and a subtractor circuit 23, and also to a terminal 21a of a switch circuit 21 described hereinafter. The output signal produced from the second comb filter 24 is supplied to a delay circuit 25 and also to a full-wave rectifier circuit 28.

The delay time of the delay circuit 22 is set as 2k•H, while the delay time of the delay circuit 25 is set as k•H (i.e. is identical to that of the delay circuit 18). The second comb filter 24 functions as a line correlation error detection circuit for the playback carrier chrominance signal.

Optimum line correlation error detection for the playback carrier chrominance signal is obtained by comparing lines which are separated by an interval such that the strongest degree of correlation is attained. For this reason, it would be desirable that line correlation error detection be performed by utilizing lines which are separated by 2 H intervals in the case of the PAL system, and by 1H intervals in the case of the NTSC system. However in the case of a PAL system carrier chrominance signal, as described hereinabove, the phase of the carrier chrominance signal in a line differs by 180° from that of another which is separated from the line by 2 H. Thus if the carrier chrominance signal of two lines which are separated by 2 H were to be mutually subtracted in order to measure the line correlation error, the crosstalk components from adjacent tracks of these lines would be mutually enhanced. Similarly, if the carrier chrominance signal of each line of a NTSC system signal were to be effectively subtracted from the line which precedes it by 1 H, the same effect of enhanced crosstalk would occur. Thus, if line correlation error detection is executed by using lines which are spaced apart by 2H, in the case of a PAL system playback carrier chrominance signal, or by 1H in the case of the NTSC system the crosstalk components from adjacent tracks will be enhanced.

For this reason with the present invention, the difference between the playback carrier chrominance signal in lines which are separated by 2k•H (i.e. by 4 H, in the case of the PAL system 2H in the case of the NTSC system is derived by the second comb filter 24, by making the delay of the delay circuit 22 equal to 2k•H. In this way the subtractor circuit 23 of comb filter 24 produces a detection signal varying in accordance with the magnitude of line correlation error, while the crosstalk components from adjacent tracks are mutually cancelled.

The line correlation error detection signal which is thereby derived from the comb filter 24 is transferred through the delay circuit 25 having a delay time of k•H, to be supplied to a full-wave rectifier circuit 26 whose output signal is supplied to a voltage comparator 27. The line correlation error detection signal is also supplied directly to a full-wave rectifier circuit 28, whose output signal is supplied to a voltage comparator 29. The voltage comparators 27 and 29 function to respectively compare the output voltages from the full-wave rectifier circuits with a preset reference voltage, which represents a predetermined value of line correlation error. Each of the voltage comparators 27 and 29 produces an output signal at the high logic level if the input full-wave rectified voltage is higher than the reference voltage (i.e. indicating that the line correlation error is higher than the preset value), and produces a low logic level signal otherwise. An AND gate 30 having an inhibit input terminal coupled to receive the output signal from the voltage comparator 27 and a normal input terminal coupled to receive the output signal from the voltage comparator 29 produces an output signal at the high logic level only under a condition in which the output signal from the voltage comparator 27 is at the low level while the output signal from the voltage comparator 29 is at the high level, and produces an output signal at the low level for any other combination of input signal levels. This output signal from the gate circuit 30 is applied to control switching operation of the switch circuit 21.

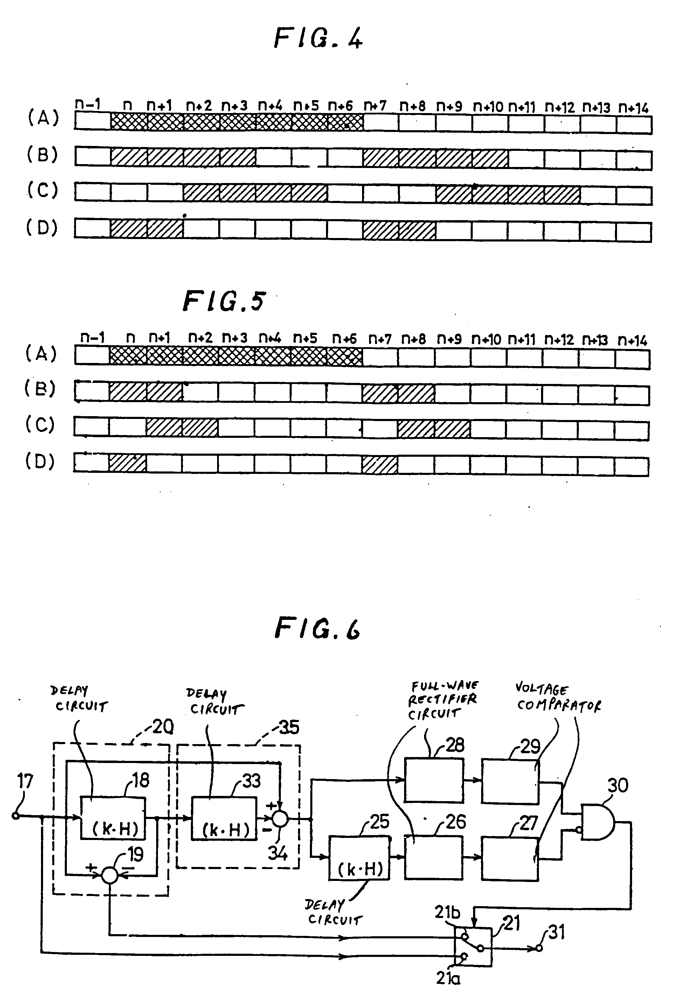

The operation of the line correlation error detection section made up of the second comb filter 24 up to the gate circuit 30 will be described, referring to Figs. 4(A) to (D) and 5(A) to (D). The operation will first be described for the case of a PAL system playback carrier chrominance signal, referring to Fig 4(A), in which 7 scan lines extending from the $n^{th}$ to the $(n+6)^{th}$ lines (indicated by cross-hatched rectangles) exhibit a high degree of mutual correlation, while the blank rectangles indicate a set of lines which precede the $n^{th}$ line and which follow the $(n+6)^{th}$ line, which exhibit high mutual correlation. There is a substantial change in color tone between the $(n-l)^{th}$ line and the $n^{th}$ line, and there is also a substantial change in color tone between the $(n+6)^{th}$ and the $(n+7)^{th}$ lines.

When such a PAL system playback carrier chrominance signal is transferred through the comb filter 24, then as shown conceptually in Fig. 4(B), line correlation error will be detected as indicated by the hatched-line rectangles, during sets of four successive lines (i.e. sets of four successive 1 H intervals), while the blank rectangles indicate lines for which no correlation error is detected. The output signal from the comb filter 24, after having been delayed by the delay circuit 25, becomes as shown conceptually in Fig. 4(C). As described above, when the output signal from the voltage comparator 27 indicates an absence of line correlation error while the output signal from the voltage comparator 29 indicates a line correlation error, and only in that condition, the output signal from the gate circuit 30 goes to a level which indicates line correlation error. This output signal is shown conceptually in Fig. 4(D), in which the hatched-line rectangels indicate signal intervals in which line correlation error is detected (i.e. corresponding to a high level output signal from the gate circuit), while the blank rectangles indicate signal intervals in which no correlation error is detected (i.e. corresponding to a low level output signal from the gate circuit).

The operation when the input playback carrier chrominance signal is an NTSC system signal will be described referring to Fig. 5, in which conditions of line correlation and signal level are indicated in the same manner as for Figs. 4(A) to (D) described above. In Fig. 5(A), large changes in color tone occur between the lines indicated as blank rectangles and the lines from n to $(n+6)$ indicated by the cross-hatched rectangles. With an NTSC system carrier chrominance signal, the delay times of the delay circuits 22 and 25 are 2 H and 1 H respectively, so that the output signals from the adder circuit 23, delay circuit 25 and delay circuit 30 are as shown in Figs. 5(B), 5(C) and 5(D) respectively. The bi-level signal from the gate circuit 30, shown conceptually in Fig. 5(D), is used to control the operation of the switch circuit 21 as described above.

When it is detected that the line correlation error is greater than the preset value, as indicated by the cross-hatched portions of Fig. 4(D) or 5(D), the switch circuit 21 directly transfers the input playback carrier chrominance signal from the input terminal 17 via the switch terminal 21a to the output terminal 31. Conversely, when the line correlation error is lower than the preset value, as indicate by the blank rectangles in Fig. 4(D) or 5-(D), the switch circuit 21 selects the output signal from the first comb filter 20 (i.e. the playback carrier chrominance signal with crosstalk components from adjacent tracks suppressed) to be transferred to the output terminal 31 via the switch terminal 21b.

As a result, in the case of the PAL system carrier chrominance signal, as shown in Fig. 4(D), the input playback carrier chrominance signal is transferred directly to the output terminal 31 from the input terminal 17 during the $n^{th}$ to the $(n+l)^{th}$ lines. During the $(n+2)^{th}$ to the $(n+6)^{th}$ lines, each line is combined in the comb filter 20 with a line which occurred 2 H intervals previously, to obtain a carrier chrominance signal having crosstalk components from adjacent tracks suppressed, and this signal is transferred to the output terminal 31 via switch terminal 21b. During the $(n+7)^{th}$ line and $(n+8)^{th}$ lines, (since a substantial change in color tone occurs between the $(n+6)^{th}$ and $(n+7)^{th}$ lines) the input carrier chrominance signal from input terminal 17 is transferred directly to the output terminal 31.

Similarly in the case of an NTSC system carrier chrominance signal, as shown in Figs. 4(A) to 4(D), the input carrier chrominance signal from terminal 17 is transferred directly to the output terminal 31 during each line in which a substantial change in color tone occurs.

In this way, when there is a large change in color tone, the input carrier chrominance signal of the comb filter 20 is transferred directly to the output terminal 31 during an interval of k•H following the commencement of the line in which the change occurred. As a result, color blurring resulting from transfer of the playback carrier chrominance signal through a comb filter in such a case can be prevented, with this prevention reliably corresponding to changes in color tone.

Fig. 6 is a block circuit diagram of a second embodiment of the present invention, in which components corresponding to those of Fig. 3 are indicated by corresponding reference numerals, with further description of these being omitted. In this embodiment, the delay circuit 18 within the comb filter 20 is also used in the process of line correlation error detection. The output playback carrier chrominance signal from the delay circuit 18 (which has been delayed by k•H) is transferred together with the input signal from terminal 17 through a comb filter 35 made up of a delay circuit 33 in which a delay of k•H is applied to the output signal from delay circuit 18 and a subtractor circuit 34 in which the input signal from terminal 17 and the output signal from the delay circuit 33 are mutually subtracted. It can thus be understood that the combination of the delay circuits 18 and 33 with the subtractor 34 constitute a comb filter which functions identically to the comb filter 24 of Fig. 3. Thus a line correlation error detection signal is produced from the subtractor circuit 34, and is thereafter utilized in exactly the same manner as the line correlation error detection signal produced from the comb filter 24 of Fig. 3. This embodiment has the advantage of a simpler configuration than that of the first embodiment, since a 1 H delay circuit 18 is used in common both for a crosstalk suppression comb filter and for a correlation error detection comb filter, and hence enables lower manufacturing cost to be attained.

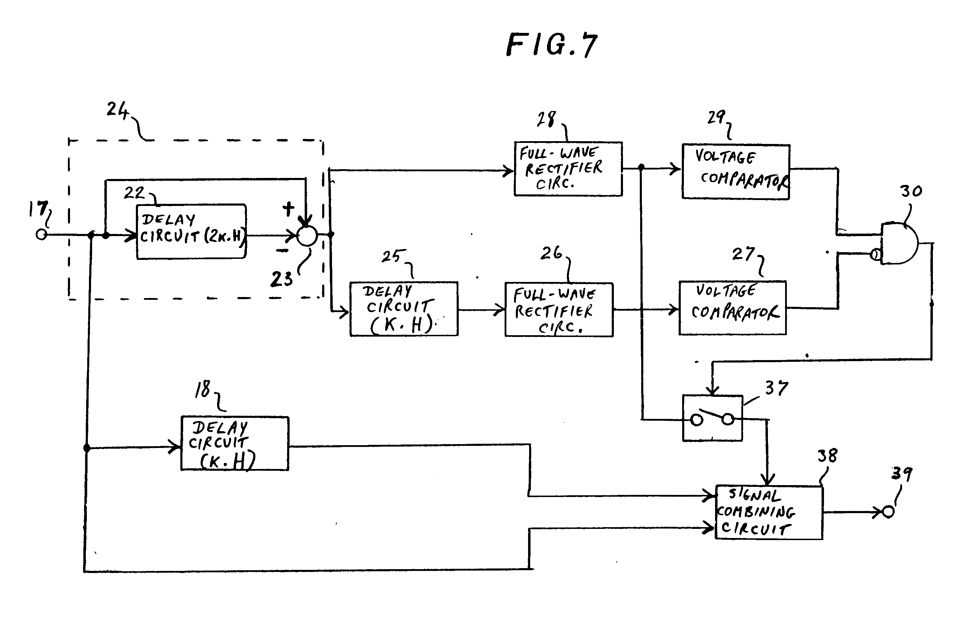

Fig. 7 is a block circuit diagram of a third embodiment of the present invention, in which components corresponding to components of Fig. 3 are indicated by corresponding reference numerals, with further description of these being omitted. In this embodiment a switch circuit 37 is controlled by the output signal from the gate 30, for transferring and interrupting transfer of the full-wave rectifier signal produced from the full-wave rectifier circuit 28 to a combining circuit 38. The combining circuit 38 is coupled to receive the input playback carrier chrominance signal from input terminal 17 and the delayed carrier chrominance signal from the output of the delay circuit 18, and functions in combination with the delay circuit 18 as a comb filter in the same manner as the comb filter 20 of the preceding embodiments, when the degree of line correlation error is sufficiently low as described hereinafter.

More specifically, the output signal from the gate 30 is applied as a switching control signal to the switch circuit 37 such that when this output signal is at the high logic level the switch circuit 37 is closed, while when this output signal is at the high logic level the switch circuit 37 is opened. Thus when there is a high degree of line correlation of the playback carrier chrominance signal, so that the line correlation error becomes smaller than the preset value, the switch circuit 37 is set in the open state. In this condition, the input playback carrier chrominance signal from terminal 17 and the delayed carrier chrominance signal from the output of the delay circuit 18 are directly combined in the combining circuit 38 in a similar manner to that of the subtractor 19 of Fig. 3, i.e. these signals are combined in the ratio 1:1 by being mutually subtracted in a subtractor element within the combining circuit 38, to obtain an output signal with crosstalk components from adjacent tracks suppressed, which is supplied to the output terminal 39.

On the other hand if the line correlation error rises above the preset value, so that the output signal from the gate 30 goes to the high logic level, then the switch circuit 37 is closed, whereby the output full-wave rectifier signal from the full-wave rectifier circuit 28 is transferred through switch 37 to the combining circuit 38, i.e. a signal which varies in amplitude in accordance with changes in magnitude of the line correlation error value is applied to the combining circuit 38. In this condition, the combining circuit 38 functions to vary the ratio by which the output signal from the delay circuit 18 is combined with the input playback carrier chrominance signal from terminal 17, such that the proportion of the delay circuit 18 output signal that is combined with the input carrier chrominance signal will be reduced in response to an increase in the amplitude of the output signal from the full-wave rectifier circuit 28, i.e. in accordance with an increase in the degree of line correlation error. If the line correlation error rises above the preset value by more than a certain amount, then the proportion of the output signal from the delay circuit 18 that is combined with the input playback carrier chrominance signal by the combining circuit 38 to form the output signal from the combining circuit 38 is brought to zero, i.e. a condition is established in which only the input playback carrier chrominance signal from input terminal 17 is transferred by the combining circuit 38 to the output terminal 39. The operation in this condition is identical to that of the embodiment of Fig. 3 when switch 21 is set to select the terminal 21a.

The variation of the ratio by which the output signal from the delay circuit 18 is combined with the input playback carrier chrominance signal from terminal 17 can be conveniently implemented by fixedly applying the input signal from terminal 17 to an input of a a subtractor element and transferring the output signal from the delay circuit 18 to another input of the subtractor through a controlled attenuator, whose degree of attenuation is controlled in accordance with the level of the output signal from the full-wave rectifier circuit 28 when the switch circuit 37 is closed, and with the degree of attenuation being made equal to zero when the switch circuit 37 is in the open state. In this way, variation of the aforementioned combining ratio is executed by variation of attenuation of the output signal from the delay circuit 18.

Thus, a playback carrier chrominance signal is produced from the output terminal 39 such that color blurring of an image derived by utilizing that carrier chrominance signal will be prevented under a condition in which there is a low degree of line correlation of the color video signal, and whereby crosstalk components from adjacent tracks will be effectively suppressed when there is a high degree of line correlation.

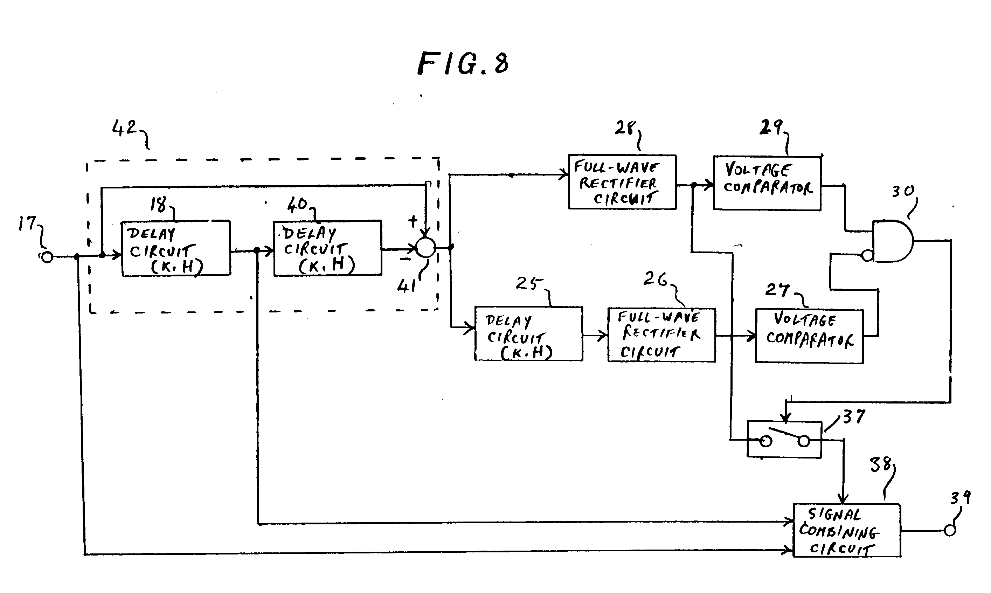

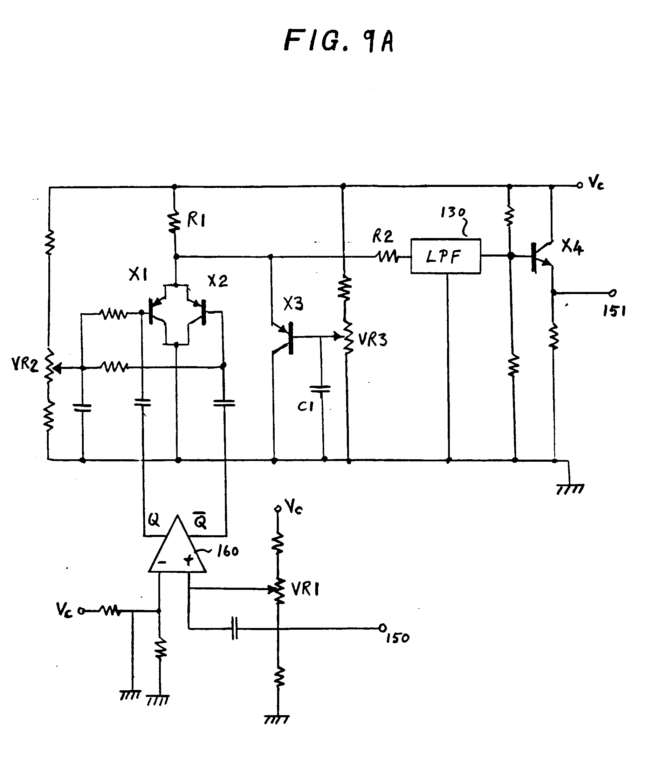

Fig. 8 is a block circuit diagram of a fourth embodiment of the present invention, in which components corresponding to components of Fig. 7 are indicated by corresponding reference numerals, with further description of these being omitted. In this embodiment, one half of the delay time of the delay circuit 22 within the comb filter 24 used for line correlation error detection in the third embodiment of Fig. 7, i.e. k•H, is implemented by the delay circuit 18. That is, the delay circuit 18 is used in common both in constituting a comb filter (in conjunction with the combining circuit 38) for crosstalk suppression as described hereinabove and also a line correlation error detection comb filter 42. The remaining half of the delay time of this comb filter 42, i.e. k•H, is implemented by a delay circuit 40. The output signal from the delay circuit 40 is supplied to a subtractor circuit 41.

This embodiment provides the advantage of a simpler configuration than that of the third embodiment, and hence enables lower manufacturing cost to be attained.

A practical embodiment of the combining circuit 38 will now be described. To achieve the results described hereinabove, this embodiment functions such that:

a) When the switch 37 is in the open state so that no output signal from the full-wave rectifier circuit 28 is applied, the input and output signals of the delay circuit 18 are mutually subtracted and the result transferred to the output terminal 39,

b) When the switch 37 is in the closed state, and the level of the output signal from the full-wave rectifier circuit 28 is below a first predetermined level but above a second predetermined level, the output signal from the delay circuit 18 is reduced in level, in a continuously variable manner, in accordance with the level of that output signal from the full-wave rectifier circuit 28, and

c) When the switch 37 is in the closed state, and the level of the output signal from the full-wave rectifier circuit 28 is below the second predetermined level, then only the input signal of the delay circuit 18 (i.e. the input playback carrier chrominance signal from terminal 17) is transferred to the output terminal 39.

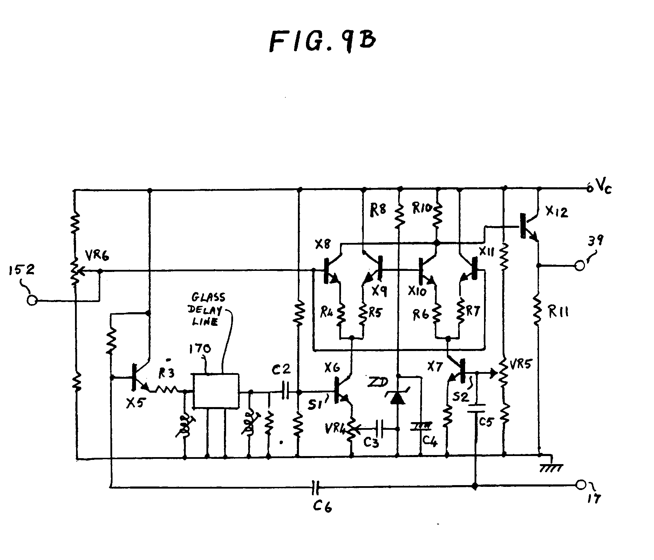

Figs. 9A and 9B respectively show a circuit diagram of the full-wave rectifier circuit 28 and a circuit diagram of the above embodiment of the combining circuit 38, together with the delay circuit 18.

In Fig. 9A, the line correlation error detection signal from comb filter 24 is applied to an input terminal 150, and converted to a bipolar signal in an operational amplifier 160. The two-phase output signals thus produced from the Q and $\overline{Q}$ outputs of operational amplifier 160 are coupled to respective base inputs of PNP transistors X1 and X2, whose collectors are connected in common to ground potential, so that a full-wave rectified signal appears across a resistor R1 connected in common to the emitters of these transistors. A DC potential from the slider of a potentiometer VR2 is also applied to the base inputs of transistors X1, X2, such that in the absence of the line correlation detection signal, the emitter potential of these transistors is fixed at a predetermined value between the positive supply potential Vc and ground potential. This value is determined such as to result in a maximum degree of comb filter attenuation in the circuit of Fig. 9B described hereinafter. A voltage clamp circuit formed of a transistor X3, capacitor Cl and potentiometer V3 is adjusted such that the emitter potential of transistors X1, X2 cannot rise above the aforementioned predetermined value. The full-wave rectifier output signal thus obtained is transferred through a low pass filter (LPF) 130 to a buffer stage based on a transistor X4, to be supplied from an output terminal 151 to the combining circuit 38.

Referring to Fig. 9B, a first amplifier circuit is formed of transistors X8, X9 having respective emitters connected through resistors R4, R5 to the collector of a transistor X6. The total DC current flow through transistors X8, X9 is determined by the DC potential of the base of transistor X6 (fixed by a resistor pair R12, R13) and the value of a resistor element of a potentiometer VR4 which is connected between the emitter of transistor X6 and ground. A second amplifier circuit is formed of transistors X10, X11 having respective emitters connected through resistors R6, R7 to the collector of a transistor X7. The total DC current flow through transistors X10, X11 is determined by the DC potential of the base of transistor X7 (set by a potentiometer VR5) and the value of a resistor R9 connected between the emitter of transistor X7 and ground. A fixed voltage produced by a resistor R8 and zener diode ZD is applied in common to the bases of transistors X9 and X10. The collectors of transistors X9, X11 are connected to the Vc positive supply voltage, while the collectors of transistors X8, X10 are connected in common through a resistor R10 to Vc. The smoothed full-wave rectifier signal from the full-wave rectifier circuit 28 is applied (through switch 37) to an input terminal 152 when switch 37 is in the closed state, and from there is applied in common to the bases of transistors X8 and X11. When switch 37 is in the open state, the common potential of the bases of transistor X88, X11 is determined by a potential applied from the slider of a potentiometer VR6. The input playback carrier chrominance signal from input terminal 17 is applied through a capacitor C5 to the base of transistor X7, and through a capacitor C6 to the delay circuit 18, which. in this embodiment consists of a buffer stage formed of transistor X5 and resistor R3, and a glass (acoustic transducer) delay line 170 with associated termination components, which provides a delay time of 1 H plus an amount corresponding to 180° phase shift of the carrier chrominance signal. The delayed carrier chrominance signal from delay line 170 is applied through a capacitor C2 to the base of transistor X6. The input playback carrier chrominance signal from terminal 17 is also applied through a capacitor C5 to the base of transistor X7. The slider of potentiometer VR1 is AC coupled to ground through a capacitor C3, so that the AC signal gain of the first amplifier circuit described above can be adjusted without altering the DC current levels of that circuit. An output signal obtained as the sum of signals S1 and S2 applied to the bases of transistors X6, X7 respectively is developed across the resistor R10, and transferred through an emitter follower circuit made up of a transistor X12 and resistor R11 to the output terminal 39.

The operation of the above circuit is as follows. With switch 37 in the open state, the potentiometer VR6 is adjusted to make the DC voltage level applied from the emitter of transistor X4 to the bases of the transistors X8 and X11 identical to the bias voltage applied to the bases of transistors X9 and X10. The potentiometer VR5 is adjusted to make the DC current flow through transistor X7 identical to that through transistor X6. The potentiometer VR4 is adjusted such that the AC gain of the circuit path extending from the base of transistor X5 to the collector of transistor X8 identical to that from the base of transistor X7 to the collector of transistor X10. This is necessary in order to compensate for the attenuation of the delay line 170, which makes it necessary for the AC gain of the first amplifier circuit to be increased above that of the second amplifer circuit. Potentiometer VR6 is then adjusted to provide maximum comb filter attenuation, which reaches a peak value at a specific value of voltage applied to the bases of transistors X8, X11. With switch 37 closed and no input signal applied to terminal 150 of the full-wave rectifier circuit, potentiometer VR2 is then adjusted to provide maximum comb filter attenuation. The potentiometer VR3 is adjusted to provide a clamping level which will prevent the voltage at output terminal 151 from rising above the value thus established.

When an input playback carrier chrominance signal is applied to terminal 17, with switch 37 in the open state, this signal is applied directly to the base of transistor X7, as signal S2, and is transferred through the delay line 17 to be applied to the base of transistor X6 as signal S1. It will be apparent that an output signal will appear across resistor R10 which is obtained by combining the signals S1 and S2 by summing these in mutually equal proportions. Due to the additional 180° phase shift applied by the k•H delay line 170, and the phase inversion between scan lines separated by k•H as described hereinabove, the circuit functions in effect to mutually subtract each scan line of the input playback carrier chrominance signal from the scan line which precedes it by k•H, thereby suppressing the crosstalk components and increasing the S/N ratio of the output playback carrier chrominance signal supplied to the output terminal 39 as discussed previously. It can be understood that the operation of the circuit in this condition corresponds to that of the embodiment of Fig. 7 with switch 37 in the open state, with the result being identical to that of the embodiment of Fig. 3 with switch 21 set to position 21b, i.e. the combining circuit with the delay line 170 functions as a comb filter for crosstalk suppression.

If now the switch 37 is closed, to connect the terminals 151 and 152, with a line correlation error detection signal applied to input terminal 150, the potential of the bases of transistor X8, X11 will be reduced (i.e. moved towards ground potential) by an amount determined by the degree of line correlation error. As a result, the levels of DC current flows through transistors X8, X11 will be reduced and those through transistors X9, X10 will be proportionately increased. The gain applied to input signal S1 by the first amplifier circuit will thereby be reduced, while that applied to input signal S2 will be increased or held constant. In this way, the proportion of the delayed carrier chrominance signal that is combined with the input carrier chrominance signal from terminal 17 to produce the output signal from terminal 39 will be reduced. This has the effect of reducing the degree of attenuation (and hence degree of crosstalk suppression) produced by the comb filter formed of the first and second amplifier circuits and the delay line 170, i.e. results in making the "valleys" of the comb filter frequency response characteristic become more shallow.

As the degree of line correlation error increases, a value of that error is reached at which the proportion of the delayed carrier chrominance signal that is combined with the input carrier chrominance signal from terminal 17 becomes zero (i.e. when transistors X8, X11 approach the cut-off state). In this condition it can be understood that the effect obtained corresponds to that of the embodiment of Fig. 3 with switch 21 set to position 21a, so that only the input playback carrier chrominance signal from terminal 17 is transferred to the output terminal 39.

With the present invention, as described above, a line correlation error of a playback carrier chrominance signal is detected using a comb filter having a delay circuit providing a delay time of 2k●H, and appropriate switching selection of the input and output playback carrier chrominance signals of a comb filter used for crosstalk suppression is executed based on that detection signal. Alternatively, the ratio by which these input and output carrier chrominance signals of that comb filter are combined to obtain an output carrier chrominance signal is varied in accordance with the line correlation error detection signal. As a result, the effects of crosstalk components from adjacent tracks in the frequency downshifted playback carrier chrominance signal are eliminated, and processing of the playback carrier chrominance signal is reliably controlled in accordance with changes in color tone. Thus even if changes in the color tone occur without corresponding changes in luminance, color blurring can be prevented, and similarly even if changes in luminance occur without corresponding changes in color tone, a playback carrier chrominance signal can be obtained with crosstalk components from adjacent tracks suppressed. Improved color image quality can thereby be obtained by comparison with the prior art. Even if the invention is applied to a VTR in which the carrier frequency of the FM luminance signal is an odd multiple of $f_H/2$, with respect to adjacent tracks, since the line correlation error detection process does not utilize the playback luminance signal, erroneous operation due to crosstalk components of the luminance signal will not occur.

In the appended claims the term "chrominance signal" is intended to mean that part of a colour video signal which contains colour information and is not intended to be limited to any particular combination or type of colour difference signals.

## Claims

1. A playback chrominance signal processing circuit for processing an input playback video signal which has been reproduced from a recording medium and includes a input playback carrier chrominance signal, including processing means (12, 14) for removing noise contained in said input playback carrier chrominance signal, and line correlation error detection means (13) for detecting a degree of line correlation error between successive scan lines of said video signal, with operating characteristics of said processing means (12, 14) being controlled in accordance with said amount of line correlation error, characterised in that said line correlation error detection means (13) comprises:

   line correlation error detection means (13, 18, 22, 23, 24, 33, 40) coupled to receive said input playback carrier chrominance signal, for detecting an amount of line correlation error between said input playback carrier chrominance signal as currently received and said input playback carrier chrominance signal after having been delayed by an amount equal to 2k times said horizontal scanning interval, where k is a positive integer equal to one in the case of an NTSC standard playback chrominance signal and equal to two in the case of a PAL standard playback chrominance signal, and for producing a detection signal in accordance with said amount of line correlation error;

   and wherein said processing means comprises:

   filter processing means (12, 14, 18-21, 37, 38) controlled, when an amount of line correlation error of said input playback carrier chrominance signal is below a predetermined value as indicated by said detection signal, for delaying said input playback carrier chrominance signal by a time amount equal to k times the duration of a horizontal scanning interval of said video signal, to obtain a delayed playback carrier chrominance signal, and for mixing said input playback carrier chrominance signal with said delayed playback carrier chrominance signal, and controlled, when said amount of line correlation error is above said predetermined value as indicated by said detection signal, for directly outputting said input playback carrier chrominance signal as said output playback carrier chrominance signal.

2. A playback chrominance signal processing circuit according to claim 1, wherein said filter processing means (12, 14, 18-21, 37, 38) comprises:

   a comb filter (12, 20) coupled to receive said input playback chrominance signal, said comb filter including delay means (18) having a delay time which is equal to $\underline{k}$ times the

duration of a horizontal scanning interval, where k is said positive integer; and

means (14, 21, 37, 38) responsive to said detection signal for selectively transferring an output playback carrier chrominance signal produced from said comb filter (22) to an output terminal when said line correlation error is below said predetermined value and transferring said input playback carrier chrominance signal to said output terminal when said line correlation error is above said predetermined value.

3. A playback chrominance signal processing circuit according to claim 1 wherein said filter processing means comprises:

a comb filter (18) coupled to receive said input playback carrier chrominance signal, said comb filter including delay means (18) having a delay time which is equal to k times the duration of a horizontal scanning interval, where k is said positive integer;

means (14, 38) responsive to said detection signal for controlling said comb filter (18) to provide a maximum degree of filter attenuation when said line correlation error is below a first predetermined value, for producing an output carrier chrominance signal with crosstalk components suppressed and transferring said output carrier chrominance signal to an output terminal (39), and for controlling said comb filter (18) when said line correlation error is above said first predetermined value and below a second predetermined value to provide a degree of filter attenuation which decreases in a continuously variable manner in accordance with an increase in said amount of line correlation error and for transferring said output carrier chrominance signal from said comb filter (18) to said output terminal (39) and for transferring only said input carrier chrominance signal to said output terminal (39) when said line correlation error is above said second predetermined value.

4. A playback chrominance signal processing circuit according to claim 2 or 3, wherein said line correlation error detection means (3, 18, 22-29, 33, 40) comprises:

a second comb filter (24) including second delay means (22) having a delay time of 2k times said horizontal scanning interval;

first level comparator means (28, 29) for detecting when a level of an output signal of said second comb filter is above said predetermined value;

third delay means (25) producing a delay equal to k times said horizontal scanning interval, coupled to receive said output signal of said second comb filter, and second level comparator means (26, 27) for receiving a delayed output signal of said second comb filter from said third delay means, for detecting when a level of said delayed output signal of said second comb filter is above said predetermined value; and

gate circuit means (30) controlled by said first and second level comparator means (26-29), for producing said detection signal at a first level only when said output signal of said second comb filter (24) is above said predetermined value while said delayed output signal of said comb filter (24) is below said predetermined value, and for otherwise producing said detection signal at a second level.

5. A playback chrominance signal processing circuit according to claim 4, wherein a single delay element (18) constitutes in common said delay means of said comb filter and a part of said second delay means (22).

6. A playback chrominance signal processing circuit according to claim 1, wherein said filter processing means (12, 14, 18-21, 37, 38) comprises:

first delay means (18) coupled to receive said playback carrier chrominance signal, said first delay means (18) having a delay time which is equal to k times the duration of a horizontal scanning interval, where k is said positive integer; and

signal combining means (38) coupled to receive said input playback carrier chrominance signal and said output playback carrier chrominance signal produced from said first delay means (18) and comprising subtractor means operable for effectively mutually subtracting said input playback carrier chrominance signal and output playback carrier chrominance signal to reduce a crosstalk component contained in said signals and controlled by said detection signal such as to combine said input playback carrier chrominance signal and output playback carrier chrominance signal by mutual subtraction in said subtractor means in a ratio of respective signal levels of 1:1, when said line correlation error is below said predetermined value, and in a ratio of respective signal levels whereby a proportion of said output playback carrier chrominance signal is reduced in a continuously variable manner in accordance with increases in said detection signal level, when said line correlation error is above said predetermined value.

7. A playback chrominance signal processing circuit according to claim 6, wherein said line correlation error detection means (13, 18, 22-29, 33, 40) comprises:

a second comb filter (24) including second delay means having a delay time of 2k times said horizontal scanning interval for producing said detection signal;

third delay means (25) producing a delay equal to k times said horizontal scanning interval, coupled to receive said detection signal, and second level comparator means (26, 27) for receiving a delayed detection signal produced from said third delay means, for detecting when a level of said delayed detection signal is above said predetermined value;

gate circuit means (30) controlled by said first and second level comparator means (26-29), for producing a control signal at a first level only when said detection signal is above said predetermined value while said delayed detection signal is below said predetermined value, and for otherwise producing said control signal at a second level; and

switch means (37) responsive to said first level of said control signal for transferring said detection signal to an output thereof and to said second level of said control signal for inhibiting said transfer.

8. A playback chrominance signal processing circuit according to claim 7, wherein a single delay element (18) constitutes in common said first delay means and a part of said second delay means.

**Revendications**

1. Circuit de traitement de signal de chrominance restitué pour traiter un signal vidéo d'entrée restitué qui a été reproduit à partir d'un support d'enregistrement et qui comprend un signal de sous-porteuse de chrominance d'entrée restitué, comprenant un moyen de traitement (12, 14) pour éliminer le bruit contenu dans ledit signal de sous-porteuse de chrominance d'entrée restitué, et un moyen (13) de détection d'erreur de corrélation de lignes pour détecter un degré d'erreur de corrélation de lignes entre des lignes de balayage successives du signal vidéo, les caractéristiques de fonctionnement dudit moyen de traitement (12, 14) étant commandées en fonction du degré d'erreur de corrélation de lignes, **caractérisé** en ce que ledit moyen (13) de détection d'erreur de corrélation de lignes comprend :

un moyen (13, 18, 22, 23, 24, 33, 40) de détection d'erreur de corrélation de lignes couplé de manière à recevoir ledit signal de sous-porteuse de chrominance d'entrée restitué, pour détecter un degré d'erreur de corrélation de lignes entre ledit signal de sous-porteuse de chrominance d'entrée restitué tel que reçu dans un instant actuel et ledit signal de sous-porteuse de chrominance d'entrée restitué après avoir été retardé d'une quantité égale à 2k fois ledit intervalle de balayage horizontal, k étant un nombre entier positif égal à 1 dans le cas d'un signal de chrominance restitué du système NTSC et égal à 2 dans le cas d'un signal de chrominance restitué du système PAL, et pour reproduire un signal de détection en fonction dudit degré d'erreur de corrélation de lignes ;

et dans lequel ledit moyen de traitement comprend :

un moyen de traitement à filtre (12, 14, 18-21, 37, 38) commandé, quand le degré d'erreur de corrélation de lignes dudit signal de sous-porteuse de chrominance d'entrée restitué est inférieur à une valeur prédéterminée telle qu'indiquée par ledit signal de détection, de manière à retarder ledit signal de sous-porteuse de chrominance d'entrée restitué d'une quantité égale à k fois la durée d'un intervalle de balayage horizontal dudit signal vidéo, pour obtenir un signal de sous-porteuse de chrominance restitué retardé, et de manière à mélanger ledit signal de sous-porteuse de chrominance d'entrée restitué avec ledit signal de sous-porteuse de chrominance restitué retardé, et commandé, quand ledit degré d'erreur de corrélation de lignes est supérieur à ladite valeur prédéterminée telle qu'indiquée par ledit signal de détection, de manière à émettre directement ledit signal de sous-porteuse de chrominance d'entrée restitué en tant que signal de sous-porteuse de chrominance de sortie restitué précité.

2. Circuit de traitement de signal de chrominance restitué selon la revendication 1, dans lequel ledit moyen de traitement à filtre (12, 14, 18-21, 37, 38) comprend :

un filtre en peigne (12, 20) couplé de manière à recevoir ledit signal de chrominance d'entrée restitué, ledit filtre en peigne comprenant un moyen de temporisation (18) présentant un temps de retard qui est égal à k fois la durée d'un intervalle de balayage horizontal, k étant ledit nombre entier positif ; et

un moyen (14, 21, 37, 38) réagissant audit signal de détection en transférant sélectivement un signal de sous-porteuse de chrominance de sortie restitué produit à partir dudit filtre en peigne (22) vers une borne de sortie lorsque ladite erreur de corrélation de lignes est inférieure à ladite valeur prédéterminée et pour transférer ledit signal de sous-porteuse de chrominance d'entrée restitué vers ladite borne de sortie lorsque ladite erreur de corrélation de lignes est supérieure à ladite valeur prédéterminée.

3. Circuit de traitement de signal de chrominance restitué selon la revendication 1, dans lequel ledit moyen de traitement à filtre comprend :

un filtre en peigne (18) couplé de manière à recevoir ledit signal de sous-porteuse de chrominance d'entrée restitué, ledit filtre en peigne comprenant un moyen de temporisation (18) présentant un temps de retard qui est égal à k fois la durée d'un intervalle de balayage horizontal, k étant ledit nombre entier positif ;

un moyen (14, 38) réagissant audit signal de détection en commandant ledit filtre en peigne (18) de manière qu'il produise un degré maximal d'atténuation de filtre lorsque ladite erreur de corrélation de lignes est inférieure à une première valeur prédéterminée, en produisant un signal de sous-porteuse de chrominance de sortie avec des composantes de transmodulation supprimées et en transférant ledit signal de sous-porteuse de chrominance de sortie vers une borne de sortie (39), et en commandant ledit filtre en peigne (18), lorsque ladite erreur de corrélation de lignes est supérieure à ladite première valeur prédéterminée et est inférieure à une seconde valeur prédéterminée, en fournissant un degré d'atténuation de filtre qui diminue d'une manière variant d'une façon continue en fonction d'une augmentation dudit degré d'erreur de corrélation de lignes et en transférant ledit signal de sous-porteuse de chrominance de sortie dudit filtre en peigne (18) vers ladite borne de sortie (39) et en transférant uniquement ledit signal de sous-porteuse de chrominance d'entrée vers ladite borne de sortie (39) lorsque ladite erreur de corrélation de ligne est supérieure à ladite seconde valeur prédéterminée.

4. Circuit de traitement de signal de chrominance restitué selon la revendication 2 ou 3, dans lequel ledit moyen (3, 18, 22-29, 33; 40) de détection d'erreur de corrélation de lignes comprend :

un second filtre en peigne (24) comprenant un second moyen de temporisation (22) présentant un temps de retard de 2 k fois ledit intervalle de balayage horizontal ;

un premier moyen (28, 29) comparateur de niveau pour détecter le moment où le niveau d'un signal de sortie dudit second filtre en peigne est supérieur à ladite valeur prédéterminée ;

un troisième moyen de temporisation (25) produisant un retard égal à k fois ledit intervalle de balayage horizontal, couplé de manière à recevoir ledit signal de sortie dudit second filtre en peigne, et un second moyen (26, 27) comparateur de niveau pour recevoir un signal de sortie retardé dudit second filtre en peigne provenant dudit troisième moyen de temporisation et pour détecter le moment où le niveau dudit signal de sortie retardé dudit second filtre en peigne est supérieur à ladite valeur prédéterminée ; et

un moyen formant circuit à porte (30) commandé par lesdits premier et second moyens (26-29) comparateurs de niveau de manière à produire ledit signal de détection à un premier niveau uniquement lorsque ledit signal de sortie dudit second filtre en peigne (24) est supérieur à ladite valeur prédéterminée pendant que ledit signal de sortie retardé dudit filtre en peigne (24) est inférieur à ladite valeur prédéterminée et, s'il n'en est pas ainsi, à produire ledit signal de détection à un second niveau.

5. Circuit de traitement de signal de chrominance restitué selon la revendication 4, dans lequel un seul élément de temporisation (18) constitue en commun ledit moyen de temporisation dudit filtre en peigne et une partie dudit second moyen de temporisation (22).

6. Circuit de traitement de signal de chrominance restitué selon la revendication 1, dans lequel ledit moyen de traitement à filtre (12, 14, 18-21, 37, 38) comprend :

un premier moyen de temporisation (18) couplé de manière à recevoir ledit signal de sous-porteuse de cnrominance restitué, ledit premier moyen de temporisation (18) présentant un temps de retard qui est égal à k fois la durée d'un intervalle de balayage horizontal, k étant ledit nombre entier positif ; et

un moyen (38) de combinaison de signaux couplé de manière à recevoir ledit signal de sous-porteuse de chrominance d'entrée restitué et ledit signal de sous-porteuse de chrominance de sortie restitué produits à partir dudit moyen de temporisation (18) et comprenant un moyen soustracteur pouvant être commandé pour soustraire mutuellement de façon effective ledit signal de sous-porteuse de chrominance d'entrée restitué et ledit signal de sous-porteuse de chrominance de sortie restitué afin de réduire la composante de transmodulation contenue dans lesdits signaux, et commandé par ledit signal de détection de manière à combiner ledit signal de sous-porteuse de chrominance d'entrée restitué et le signal de sous-porteuse de chrominance de sortie restitué par soustraction mutuelle dans ledit moyen soustracteur suivant un rapport de niveaux de signaux de 1:1, lorsque ladite erreur de corrélation de lignes est inférieure à ladite valeur prédéterminée, et suivant un rapport de niveaux de signaux respectifs grâce à quoi la proportion dudit signal de sous-porteuse de chrominance de sortie restitué se trouve réduite d'une manière continuellement variable en fonction des augmentations dudit niveau de signal de détection lorsque ladite erreur de corrélation de lignes est supérieure à ladite valeur prédéterminée.

7. Circuit de traitement de signal de chrominance restitué selon la revendication 6, dans lequel ledit moyen (13, 18, 22-29, 33, 40) de détection d'erreur de corrélation de lignes comprend :

un second filtre en peigne (24) comprenant un second moyen de temporisation présentant un temps de retard de 2 k fois ledit intervalle de balayage horizontal pour produire ledit signal de détection ;

un troisième moyen de temporisation (25) produisant un retard égal à k fois ledit intervalle de balayage horizontal, couplé de manière à recevoir ledit signal de détection, et un second moyen (26, 27) comparateur de niveau pour recevoir un signal de détection retardé produit à partir dudit troisième moyen de temporisation en vue de détecter le moment où le niveau dudit signal de détection retardé est supérieur à ladite valeur prédéterminée ;

un moyen formant circuit à porte (30) commandé par lesdits premier et second moyens (26-29) comparateurs de niveaux, pour produire un signal de commande à un premier niveau uniquement lorsque ledit signal de détection est supérieur à ladite valeur prédéterminée alors que ledit signal de détection retardé est inférieur à ladite valeur prédéterminée, et, s'il n'en est pas ainsi, pour produire ledit signal de commande à un second niveau ; et

un moyen de commutation (37) réagissant audit premier niveau dudit signal de commande en transférant ledit signal de détection vers une sortie de ce moyen et audit second niveau dudit signal de commande en neutralisant ledit transfert.

8. Circuit de traitement de signal de chrominance restitué selon la revendication 7, dans lequel un seul élément de temporisation (18) constitue en commun ledit premier moyen de temporisation et une partie dudit second moyen de temporisation.

**Patentansprüche**

1. Wiedergabechrominanzsignal-Verarbeitungsschaltung zum Verarbeiten eines eingegebenen Wiedergabe-Videosignals, das von einem Aufzeichnungsträger reproduziert wurde und ein Eingangs-Wiedergabeträger-Chrominanzsignal enthält, mit einer Verarbeitungseinrichtung (12, 14) zum Beseitigen des in dem Eingangs-Wiedergabeträger-Chrominanzsignal enthaltenen Rauschens und mit einer Zeilenkorrelationsfehler-Erfassungseinrichtung (13) zum Erfassen eines Ausmasses eines Zeilenkorrelationsfehlers zwischen aufeinanderfolgenden Abtastzeilen des Videosignals, wobei die Arbeitskennlinien der Verarbeitungseinrichtung (12, 14) entsprechend dem Ausmaß des Zeilenkorrelationsfehlers gesteuert sind, **dadurch gekennzeichnet,**
daß die Zeilenkorrelationsfehler-Erfassungseinrichtung (13) eine zur Aufnahme des Eingangs-Wiedergabeträger-Chrominanzsignals geschaltete Zeilenkorrelationsfehler-Meßeinrichtung (13, 18, 22, 23, 24, 33, 40) aufweist, die das Ausmaß des Zeilenkorrelationsfehlers zwischen dem gegenwärtig empfangenen Eingangs-Wiedergabeträger-Chrominanzsignal und dem Eingangs-Wiedergabeträger-Chrominanzsignal nach einer Verzögerung in einem Ausmaß erfaßt, das gleich dem 2k-fachen der Horizontal-Abtastperiode ist, wobei k eine positive ganze Zahl ist, die im Falle eines NTSC-Norm-Wiedergabechrominanzsignals gleich 1 ist und im Falle eines PAL-Norm-Niedergabechrominanzsignals gleich 2 ist, und die in Übereinstimmung mit dem Ausmaß des Zeilenkorrelationsfehlers ein Meßsignal erzeugt, und
daß die Verarbeitungseinrichtung eine Filterverarbeitungseinrichtung (12, 14, 18 bis 21, 37, 38) aufweist, die dann, wenn gemäß der Angabe durch das Meßsignal das Ausmaß des Zeilenkorrelationsfehlers des Eingangs-Wiedergabeträger-Chrominanzsignals unterhalb eines vorbestimmten Werts liegt, zum Verzögern des Eingangs-Wiedergabeträger-Chrominanzsignals um eine Zeitspanne, die gleich dem k-fachen der Dauer einer Horizontalabtastperiode des Videosignals ist, um ein verzögertes Wiedergabeträger-Chrominanzsignal zu erhalten, und zum Mischen des Eingangs-Wiedergabeträger-Chrominanzsignals mit dem verzögerten Wiedergabeträger-Chrominanzsignal gesteuert ist, bzw. dann, wenn gemäß der Angabe durch das Meßsignal das Ausmaß des Zeilenkorrelationsfehlers oberhalb des vorbestimmten Werts liegt, zum direkten Ausgeben des Eingangs-Wiedergabeträger-Chrominanzsignals als Ausgangs-Wiedergabeträger-Chrominanzsignal gesteuert ist.

2. Wiedergabechrominanzsignal-Verarbeitungsschaltung nach Anspruch 1, in der die Filterverarbeitungseinrichtung (12, 14, 18 bis 21, 37, 38)

ein zum Aufnehmen des Eingangs-Wiedergabechrominanzsignals geschaltetes Kammfilter (12, 20), das eine Verzögerungseinrichtung (18) mit einer Verzögerungszeit enthält, die gleich dem k-fachen der Dauer einer Horizontalabtastperiode ist, wobei k die positive ganze Zahl ist, und

eine auf das Meßsignal ansprechende Einrichtung (14, 21, 37, 38) aufweist, die selektiv dann, wenn das Ausmaß des Zeilenkorrelationsfehlers unterhalb des vorbestimmten Werts liegt, ein von dem Kammfilter (22) erzeugtes Ausgangs-Wiedergabeträger-Chrominanzsignal zu einem Ausgangsanschluß überträgt, bzw. dann, wenn das Ausmaß des Zeilenkorrelationsfehlers oberhalb des vorbestimmten Werts liegt, das Eingangs-Wiedergabeträger-Chrominanzsignal zu dem Ausgangsanschluß überträgt.

3. Wiedergabechrominanzsignal-Verarbeitungsschaltung nach Anspruch 1, in der die Filterverarbeitungseinrichtung

ein zur Aufnahme des Eingangs-Wiedergabeträger-Chrominanzsignals geschaltetes Kammfilter (18), das eine Verzögerungseinrichtung (18) mit einer Verzögerungszeit enthält, die gleich dem k-fachen der Dauer einer Horizontalabtastperiode ist, wobei k die positive ganze Zahl ist, und

eine auf das Meßsignal ansprechende Einrichtung (14, 38) aufweist, die dann, wenn der Zeilenkorrelationsfehler unterhalb eines ersten vorbestimmten Werts liegt, das Kammfilter (18) zu einer maximalen Filterdämpfung steuert, ein Ausgangs-Trägerchrominanzsignal mit unterdrückten Übersprechkomponenten erzeugt und das Ausgangs-Trägerchrominanzsignal zu einem Ausgangs-Anschluß (39) überträgt, die dann, wenn der Zeilenkorrelationsfehler oberhalb des ersten vorbestimmten Werts und unterhalb eines zweiten vorbestimmten Werts liegt, das Kammfilter (18) zu einem Filterdämpfungsgrad steuert, der auf kontinuierlich veränderte Weise entsprechend einem Anstieg des Ausmasses des Zeilenkorrelationsfehlers abnimmt, und das Ausgangs-Trägerchrominanzsignal aus dem Kammfilter (18) zu dem Ausgangsanschluß (39) überträgt, und die dann, wenn der Zeilenkorrelationsfehler oberhalb des zweiten vorbestimmten Werts liegt, nur das eingegebene Trägerchrominanzsignal zu dem Ausgangsanschluß (39) überträgt.

4. Wiedergabechrominanzsignal-Verarbeitungsschaltung nach Anspruch 2 oder 3, in der die Zeilenkorrelationsfehler-Meßeinrichtung (3, 18, 22 bis 29, 33, 40)

ein zweites Kammfilter (24) mit einer zweiten Verzögerungseinrichtung (22) mit einer Verzögerungszeit von dem 2k-fachen der Horizontalabtastperiode,

eine erste Pegelvergleichseinrichtung (28, 29) zum Ermitteln, ob der Pegel eines Ausgangssignals des zweiten Kammfilters oberhalb des vorbestimmten Werts liegt,

eine zur Aufnahme des Ausgangssignals des zweiten Kammfilters geschaltete dritte Verzögerungseinrichtung (25) für eine Verzögerung, die gleich dem k-fachen der Horizontalabtastperiode ist,

eine zweite Pegelvergleichseinrichtung (26, 27), die ein verzögertes Ausgangssignal des zweiten Kammfilters aus der dritten Verzögerungseinrichtung aufnimmt und ermittelt, ob der Pegel des verzögerten Ausgangssignals des zweiten Kammfilters oberhalb des vorbestimmten Werts liegt, und

eine durch die erste und die zweite Pegelvergleichseinrichtung (26 bis 29) gesteuerte Schalteinrichtung (30) aufweist, die das Meßsignal mit einem ersten Pegel nur dann abgibt, wenn das Ausgangssignal des zweiten Kammfilters (24) oberhalb des vorbestimmten Werts liegt, während das verzögerte Ausgangssignal des Kammfilters (24) unterhalb des vorbestimmten Werts liegt, und die ansonsten das Meßsignal mit einem zweiten Pegel abgibt.

5. Wiedergabechrominanzsignal-Verarbeitungsschaltung nach Anspruch 4, in der ein einziges Verzögerungselement (18) gemeinsam die Verzögerungseinrichtung des Kammfilters und einen Teil der zweiten Verzögerungseinrichtung (22) bildet.

6. Wiedergabechrominanzsignal-Verarbeitungsschaltung nach Anspruch 1, in der die Filterverarbeitungseinrichtung (12, 14, 18 bis 21, 37, 38)

eine zur Aufnahme des Wiedergabeträger-Chrominanzsignals geschaltete erste Verzögerungseinrichtung (18) mit einer Verzögerungszeit, die gleich dem k-fachen der Dauer einer Horizontalabtastperiode ist, wobei k die positive ganze Zahl ist, und

eine zur Aufnahme des Eingangs-Wiedergabeträger-Chrominanzsignals und des Ausgangs-Wiedergabeträger-Chrominanzsignals aus der ersten Verzögerungseinrichtung (18) geschaltete Signalkombiniereinrichtung (38) aufweist, die eine zum effektiven wechselseitigen Subtrahieren des Eingangs-Wiedergabeträger-Chrominanzsignals und des Ausgangs-Wiedergabeträger-Chrominanzsignals für das Verringern einer in den Signalen enthaltenen Übersprechkomponente betreibbare Subtrahiereinrichtung enthält und durch das Meßsignal zum Kombinieren des Eingangs-Wiedergabeträger-Chrominanzsignals und des Ausgangs-Wiedergabeträger-Chrominanzsignals durch gegenseitige Subtraktion in der Subtrahiereinrichtung in einem Verhältnis der jeweiligen Signalpegel von 1:1, wenn der Zeilenkorrelationsfehler unterhalb des vorbestimmten Werts liegt, bzw. in einem Verhältnis der jeweiligen Signalpegel unter kontinuierlicher veränderbarer Verringerung eines Anteils des Ausgangs-Wiedergabeträger-Chrominanzsignals entsprechend dem Anstieg des Meßsignalpegels gesteuert ist, wenn der Zeilenkorrelationsfehler oberhalb des vorbestimmten Werts liegt.

7. Wiedergabechrominanzsignal-Verarbeitungsschaltung nach Anspruch 6, in der die Zeilenkorrelationsfehler-Meßeinrichtung (13, 18, 22 bis 29, 33, 40)

ein zweites Kammfilter (24) mit einer zweiten Verzögerungseinrichtung mit einer Verzögerungszeit des 2k-fachen der Horizontalabtastperiode zum Erzeugen des Meßsignals,

eine zur Aufnahme des Meßsignals geschaltete dritte Verzögerungseinrichtung (25) für eine Verzögerung, die gleich dem k-fachen der Horizontalabtastperiode ist,

eine zweite Pegelvergleichseinrichtung (2b, 27), die ein verzögertes Meßsignal aus der dritten Verzögerungseinrichtung aufnimmt und ermittelt, ob der Pegel des verzögerten Meßsignals oberhalb des vorbestimmten Werts liegt,

eine durch die erste und die zweite Pegelvergleichseinrichtung (26 bis 29) gesteuerte Schaltgliedeinrichtung (30), die ein Steuersignal mit einem ersten Pegel nur dann abgibt, wenn das Meßsignal oberhalb des vorbestimmten Werts liegt, während das verzögerte Meßsignal unterhalb des vorbestimmten Werts liegt, und die ansonsten das Steuersignal mit einem zweiten Pegel abgibt, und

eine Schaltervorrichtung (37) aufweist, die auf den ersten Pegel des Steuersignals durch Übertragen des Meßsignals zu einem Ausgang hierfür bzw. auf den zweiten Pegel des Steuersignals durch Sperren des Übertragens anspricht.

8. Wiedergabechrominanzsignal-Verarbeitungsschaltung nach Anspruch 7, in der ein einziges Verzögerungselement (18) gemeinsam die erste Verzögerungseinrichtung und einen Teil der zweiten Verzögerungseinrichtung bildet.

# FIG. 1

PRIOR ART

1H
DELAY
CIRCUIT   6

FULL-WAVE
RECTIFIER
CIRCUIT   8

WAVEFORM
SHAPING
CIRCUIT   9

Y   2

7

3a   3

C   1

4   5

1H
DELAY CIRCUIT

3b

10

# FIG. 2

11

LINE
CORRELATION
ERROR DETECTION
CIRCUIT   13

14

COMB
FILTER   12

OUTPUT
SECTION   15

# FIG. 3

# FIG. 4

# FIG.5

# FIG.6

# FIG.7

EP 0 293 188 B1

# FIG.8

FULL-WAVE RECTIFIER CIRCUIT 28

VOLTAGE COMPARATOR 29

30

42

DELAY CIRCUIT (K.H) 18

DELAY CIRCUIT (K.H) 40

17

41

DELAY CIRCUIT (K.H) 25

FULL-WAVE RECTIFIER CIRCUIT 26

VOLTAGE COMPARATOR 27

37

SIGNAL COMBINING CIRCUIT 38

39

EP 0 293 188 B1

# FIG. 9A

# FIG. 9B